# EUROPÄISCHE PATENTANMELDUNG

(11) **EP 1 452 745 A1**
(43) Veröffentlichungstag der Anmeldung: **01.09.2004**
(21) Anmeldenummer: 04003320.1
(22) Anmeldetag: 13.02.2004
(51) Int. Cl.: F16B 5/06

(54) **Befestigungsclip, insbesondere zum Befestigen eines eine Fensterscheibe einfassenden Dichtungs-und/oder Führungsprofils an der Karosserie eines Kraftfahrzeugs**

(30) Priorität: 28.02.2003 DE 10308906
(71) Anmelder: Metzeler Automotive Profile Systems GmbH, 88131 Lindau/Bodensee (DE)
(72) Erfinder: Dieterle, Heinz-Jürgen, 88167 Röthenbach (DE)
(74) Vertreter: Schober, Christoph D.

(57) **Zusammenfassung**

Ein Befestigungsclip, der insbesondere zum Befestigen eines eine Fensterscheibe einfassenden Dichtungs- und/oder Führungsprofils (40) an der Karosserie (50) eines Kraftfahrzeugs dient, ist mit einem Halteteil (20), das an einem ersten Bauteil (50) befestigbar und um eine zu einer Befestigungsrichtung (x) parallelen Rotationsachse (A) drehbar ist, und einem Steckteil (10), das an einem zweiten Bauteil (40) befestigbar und in Befestigungsrichtung (x) mit dem Halteteil (20) verbindbar ist, versehen. Das Halteteil (20) ist mit wenigstens einem Rastschenkel (21, 22), der in einer zu der Befestigungsrichtung (x) orthogonalen ersten Transversalrichtung (y) elastisch verformbar ist und eine Absatzfläche (23), an der das Steckteil (10) zum Verbinden mit dem Halteteil (20) formschlüssig festlegbar ist, aufweist, und einem Gürtelabschnitt (26), an dem der Rastschenkel (21, 22) schwenkbar angeordnet ist, versehen. Der Rastschenkel (21, 22) ist mit einem freien Ende, das dem Gürtelabschnitt (26) abgewandt ist und eine an das erste Bauteil (50) angrenzende Anlagefläche (32) aufweist, und einer sich in Befestigungsrichtung (x) konisch verjüngenden Spreizfläche (24), durch die der Rastschenkel (21, 22) beim Einführen des Steckteils (10) in das Halteteil (20) in der ersten Transversalrichtung (y) verformt wird, versehen. Der Formschluss zwischen dem Steckteil (10) und der Absatzfläche (23) ist durch Drehen des Halteteils (20) um einen vorgegebenen Sicherungswinkel (α) lösbar, so dass sich bei einer verhältnismässig grossen Abzugskraft eine einfache Montage und zerstörungsfreie Demontage ergibt.

## Beschreibung

Die Erfindung betrifft einen Befestigungsclip, der insbesondere zum Befestigen eines eine Fensterscheibe einfassenden Dichtungs- und/oder Führungsprofils an der Karosserie eines Kraftfahrzeugs dient. Der Befestigungsclip ist mit einem Halteteil versehen, das an einem ersten Bauteil befestigbar und um eine zu einer Befestigungsrichtung parallelen Rotationsachse drehbar ist. Zudem ist der Befestigungsclip mit einem Steckteil versehen, das an einem zweiten Bauteil befestigbar und in Befestigungsrichtung mit dem Halteteil verbindbar ist. Das Halteteil ist mit wenigstens einem Rastschenkel versehen, der in einer zu der Befestigungsrichtung orthogonalen ersten Transversalrichtung elastisch verformbar ist und eine Absatzfläche, an der das Steckteil zum Verbinden mit dem Halteteil formschlüssig festlegbar ist, aufweist. Ausserdem weist das Halteteil einen Gürtelabschnitt auf, an dem der Rastschenkel schwenkbar angeordnet ist.

Einen derartigen Befestigungsclip offenbart die DE 33 24 762 A1. Der bekannte Befestigungsclip dient zur lösbaren Verbindung von aufeinander geschichteten Bauteilen und setzt sich aus einem Verriegelungsteil und einem Einsatzstück zusammen. Das Einsatzstück ist in einem mit einem rechteckigen Querschnitt versehenen Loch verdrehungssicher angeordnet. Rastschenkel darstellende Wände des Einsatzstücks sind mit Schrägen versehen, die gewährleisten, dass das Einsatzstück an dem Rand des Lochs einrastet. Nachdem das Einsatzstück an einer das Loch aufweisenden Platte befestigt ist, wird das Verriegelungsteil in das Einsatzstück eingeführt. Zu diesem Zweck weist das Verriegelungsteil einen Schaft oder Hakenabschnitt auf, der mit sich in einer ersten Transversalrichtung erstreckenden Vorsprüngen versehen ist. Nach dem Einsetzen in das Einsatzstück wird das Verriegelungsteil um 90 Grad gedreht. Die Drehung des Verriegelungsteils hat zur Folge, dass die Vorsprünge an Schultern des Einsatzstücks zu liegen kommen und auf diese Weise eine formschlüssige Verbindung zwischen dem Verriegelungsteil und dem Einsatzstück bewirken. Die Stirnflächen der Vorsprünge drücken zudem die Wände auseinander und stellen somit einen festen Sitz des Einsatzstücks sicher.

Als nachteilig bei dem bekannten Befestigungsclip hat sich eine relativ aufwendige Montage erwiesen, die davon herrührt, dass es zum Verbinden des Verriegelungsteils mit dem Einsatzstück eines Drehvorgangs bedarf.

Ausserdem wird in der DE 198 30 752 A1 ein Befestigungsclip zum Verbinden von zwei plattenförmigen Bauteilen beschrieben. Der bekannte Befestigungsclip weist einen Fussabschnitt auf, der als an einer Aussenseite des ersten Bauteils anlegbarer Flansch ausgebildet ist. Der Befestigungsclip ist zudem mit einem Halteabschnitt versehen, der sich aus vier, um 90° versetzt zueinander angeordneten Beinen zusammensetzt. Die Beine sind durch Schlitze voneinander getrennt und weisen eine Haltefläche bildende Schultern auf. Die auf Grund der Schlitze federnd ausgestalteten Beine ermöglichen, den Halteabschnitt in eine Öffnung des zweiten Bauteils einzuführen, und zwar derart, dass die durch die Schultern der Beine gebildete Haltefläche an dem Rand der Öffnung auf der dem ersten Bauteil abgewandten Seite anliegt. Auf diese Weise ergibt sich eine formschlüssige Verbindung, die das erste Bauteil an dem zweiten Bauteil festhält.

Die Wirksamkeit des durch den Befestigungsclip hervorgerufenen Formschlusses hängt in erster Linie von der Grösse der Haltefläche ab. Denn je grösser die Haltefläche ist, die an dem Rand der Öffnung anliegt, um so grösser ist die Abzugskraft, die erforderlich ist, den Halteabschnitt aus der Öffnung des zweiten Bauteils herauszuziehen. Massgebend für die Wirksamkeit des Formschlusses ist weiterhin die Verformungsfähigkeit, die der Halteabschnitt aufweisen muss, um in die Öffnung des zweiten Bauteils hindurchgesteckt werden zu können. Die Verformungsfähigkeit wird ausser durch den Werkstoff, aus dem der in der Regel durch Spritzgiessen gefertigte Befestigungsclip besteht, vor allem durch die Formgebung des Halteabschnitts bestimmt. Die an die Formgebung gestellten Anforderungen bestehen darin, einerseits eine möglichst grosse Abzugskraft zu gewährleisten und andererseits die Montagekraft, die erforderlich ist, um den Halteabschnitt durch die Öffnung des Bauteils hindurchzustecken, möglichst gering zu halten. Die federnd ausgestalteten Beine des aus der DE 198 30 752 A1 bekannten Befestigungsclips ermöglichen zwar ein einfaches Einführen des Halteabschnitts in die Öffnung des zweiten Bauteils und damit eine verhältnismässig geringe Montagekraft, nachteilig ist aber eine vergleichsweise geringe Abzugskraft, die sich nach dem Verrasten der Schultern ergibt.

Weiterhin offenbart die DE 100 08 565 A1 einen Befestigungsclip, der dazu dient, ein aus einem verhältnismässig weichen Werkstoff bestehendes Bauteil, beispielsweise eine akustische Dämmatte, an einem härteren Bauteil, beispielsweise der Motorhaube eines Kraftfahrzeugs, zu befestigen. Der bekannte Befestigungsclip weist zu diesem Zweck einen Fussabschnitt auf, der eine verhältnismässig grossflächige Befestigungsplatte bildet, die stoffschlüssig, zum Beispiel durch Kleben oder Ultraschallschweissen, mit dem zu befestigenden Bauteil verbunden wird. Der Befestigungsclip ist darüber hinaus mit einem elastisch verformbaren Halteabschnitt versehen, der durch zwei in Art eines Satteldachs angeordnete Schenkel gebildet wird. Einer der Schenkel ist fest mit dem Fussabschnitt verbunden, wohingegen der andere Schenkel durch einen Spalt von der Befestigungsplatte beabstandet ist, um die Verformungsfähigkeit des Halteabschnitts sicherzustellen. Die zudem gelenkig miteinander verbundenen Schenkel weisen Ränder auf, die mit geradlinig verlaufenden Rastnuten versehen sind. Die auf diese Weise verhältnismässig grossflächigen Rastnuten tragen zwar zu einem zuverlässigen Formschluss bei, verhindern aber zugleich eine zerstörungsfreie Demontage des Befestigungsclips.

Der Erfindung liegt die **Aufgabe** zugrunde, einen Befestigungsclip zu schaffen, der sich bei einer verhältnismässig grossen Abzugskraft durch eine einfache Montage und eine zerstörungsfreie Demontage auszeichnet.

Zur **Lösung** dieser Aufgabe ist bei einem Befestigungsclip mit den oben genannten Merkmalen in Übereinstimmung mit Anspruch 1 erfindungsgemäss vorgesehen, dass der Rastschenkel mit einem freien Ende, das dem Gürtelabschnitt abgewandt ist und eine an das erste Bauteil angrenzende Anlagefläche aufweist, und einer sich in Befestigungsrichtung konisch verjüngenden Spreizfläche, durch die der Rastschenkel beim Einführen des Steckteils in das Halteteil in der ersten Transversalrichtung verformt wird, versehen ist. Der Formschluss zwischen dem Steckteil und der Absatzfläche ist durch Drehen des Halteteils um einen vorgegebenen Sicherungswinkel lösbar.

Der erfindungsgemässe Befestigungsclip beruht auf der Erkenntnis, durch einen zweigeteilten Aufbau bei einer verhältnismässig grossen Abzugskraft sowohl eine einfache Montage als auch eine zerstörungsfreie Demontage zu erreichen. Der zweigeteilte Aufbau ermöglicht, das Halteteil an dem ersten Bauteil, beispielsweise der Karosserie eines Kraftfahrzeugs, zu befestigen und separat das Steckteil an dem zweiten Bauteil, beispielsweise einem Dichtungsprofil, anzuordnen. Durch Einführen des Steckteils in das Halteteil lässt sich anschliessend das zweite Bauteil formschlüssig mit dem ersten Bauteil verbinden. Die Spreizfläche gewährleistet, dass der Rastschenkel durch das Steckteil gezielt in der ersten Transversalrichtung verformt wird. Auf Grund der Verformungsfähigkeit des Rastschenkels in der zu der Befestigungsrichtung orthogonalen ersten Transversalrichtung wird eine Steckverbindung realisiert, die eine einfache und praxisgerechte Montage sicherstellt. Demgegenüber ist eine zerstörungsfreie Demontage des erfindungsgemässen Befestigungsclips in erster Linie darauf zurückzuführen, dass der Formschluss zwischen dem Steckteil und dem Halteteil durch Drehen des Halteteils um einen vorgegebenen Sicherungswinkel lösbar ist. Bei gelöstem Formschluss ist es nicht erforderlich, eine Abzugskraft zu überwinden, um das Steckteil von dem Halteteil zu trennen. Aus diesem Grund ist es möglich, dem Rastschenkel eine Form zu geben, die bei vorhandenem Formschluss zwischen Steckteil und Halteteil eine verhältnismässig grosse Abzugskraft und damit eine zuverlässige Befestigung des zweiten Bauteils an dem ersten Bauteil gewährleistet.

Vorteilhafte Weiterbildungen des erfindungsgemässen Befestigungsclips stellen die Gegenstände der Ansprüche 2 bis 15 dar.

So ist es von Vorteil, wenn der Sicherungswinkel annähernd 90° beträgt. Denn in diesem Fall ist sichergestellt, dass bei Relativbewegungen zwischen dem ersten Bauteil und dem zweiten Bauteil, die beispielsweise durch Schwingungen hervorgerufen werden, eine ausreichende Überdeckung zwischen dem Steckteil und der Absatzfläche des Halteteils vorhanden ist, die ein unbeabsichtigtes Lösen des Formschlusses verhindert.

Von Vorteil ist ferner, wenn das Halteteil einen kreisförmigen Gürtelabschnitt, an dem der Rastschenkel schwenkbar angeordnet ist, aufweist. Die schwenkbare Anordnung des Rastschenkels gewährleistet eine ausreichende Verformungsfähigkeit in der ersten Transversalrichtung, so dass zum Verbinden von Steckteil und Halteteil eine verhältnismässig geringe Montagekraft erforderlich ist. Um eine schwenkbar Anordnung des Rastschenkels an dem Gürtelabschnitt zu realisieren, ist es vorteilhaft, den Rastschenkel im Bereich des Gürtelabschnitts mit einer Vertiefung zu versehen. Die Vertiefung ermöglicht, ein filmartiges Scharnier auszubilden, das ein gezieltes Verformen des Rastschenkels gewährleistet.

In einer bevorzugten Ausgestaltung des erfindungsgemässen Befestigungsclips weist das Halteteil wenigstens eine Wandung auf, die durch eine Ausnehmung von dem Rastschenkel beabstandet ist. Die Wandung trägt zu einer ausreichenden Steifigkeit des Halteteils bei, die eine zuverlässige Befestigung an dem ersten Bauteil sicherstellt. Die Ausnehmung dagegen gewährleistet ein ungehindertes Verformen des Rastschenkels.

Um das Halteteil an dem ersten Bauteil zu befestigen, weist die Wandung ein erstes Ende, das mit dem Gürtelabschnitt verbunden ist, und ein zweites Ende, an dem eine vorzugsweise polygonal ausgestaltete Halteplatte angeordnet ist, auf. Die beispielsweise als Sechskant ausgestaltete Halteplatte dient zum einen dazu, das Halteteil an dem ersten Bauteil zu befestigen. Zum anderen ermöglicht die Halteplatte, das Halteteil mittels eines Werkzeugs, beispielsweise ein Schraubenschlüssel, zu greifen, um so das Halteteil um die Rotationsachse zu drehen. Bei einer Drehung des Halteteils um den Sicherungswinkel lässt sich somit das Steckteil von dem Halteteil lösen.

Weiterhin ist es von Vorteil, wenn die Halteplatte durch ein vorzugsweise gekrümmt ausgebildetes Abstandsglied mit der Wandung verbunden ist, wobei sich das Abstandsglied durch eine vorzugsweise annähernd ovale Öffnung des ersten Bauteils erstreckt. Das Abstandsglied verbindet die Wandung mit der Halteplatte im Bereich der beispielsweise als Langloch ausgebildeten Öffnung. Dies ermöglicht, die Wandung und die Halteplatte auf einander abgewandten Seiten des ersten Bauteils anzuordnen. In diesem Fall trägt eine annähernd oval oder langrund ausgestaltete Öffnung dazu bei, das Halteteil in die Öffnung einzuführen, um eine vorläufige Fixierung des Halteteils an dem ersten Bauteil zu erreichen. Zu diesem Zweck weist der Rastschenkel vorteilhafterweise eine Anlagefläche auf, die an einem inneren Rand der Öffnung des ersten Bauteils angrenzt, wobei die Halteplatte auf der dem Rastschenkel abgewandten Seite des ersten Bauteils an einem äusseren Rand der Öffnung anliegt. Das Halteteil lässt sich auf diese Weise zwischen der Anlagefläche des Rastschenkels und der Halteplatte an dem ersten Bauteil festklemmen.

Zweckmässigerweise ist die Halteplatte mit einem Durchgang versehen, der ermöglicht, das Steckteil durch die Halteplatte und die Öffnung des ersten Bauteils hindurch in das Halteteil einzuführen, um einen Formschluss zwischen dem Steckteil und der Absatzfläche des Rastschenkels zu bewirken.

In einer bevorzugten Ausgestaltung des erfindungsgemässen Befestigungsclips weist der Rastschenkel eine sich in Befestigungsrichtung an die Spreizfläche anschliessende Zentrierfläche auf. Die Zentrierfläche trägt dazu bei, das Steckteil in bezug auf die Absatzfläche des Rastschenkels auszurichten, so dass sich ein zuverlässiger Formschluss zwischen dem Halteteil und dem Steckteil ergibt.

Das Steckteil weist zweckmässigerweise einen an dem zweiten Bauteil befestigbaren Fussabschnitt und einen sich in Befestigungsrichtung an den Fussabschnitt anschliessenden Hakenabschnitt auf. Der Hakenabschnitt dient dazu, formschlüssig in das Halteteil einzugreifen. Demgegenüber dient der Fussabschnitt dazu, das Steckteil an dem zweiten Bauteil zu befestigen. Diese funktionelle Aufteilung des Steckteils ermöglicht, den Fussabschnitt auf praxisgerechte Weise stoffschlüssig, beispielsweise durch Spritzgiessen, mit dem zweiten Bauteil zu verbinden.

Um einen zuverlässigen Formschluss zwischen Steckteil und Halteteil sicherzustellen, hat es sich zudem als vorteilhaft erwiesen, wenn das Steckteil einen sich in Befestigungsrichtung an den Hakenabschnitt anschliessenden Zentrierabschnitt aufweist. Der Zentrierabschnitt wirkt mit der Zentrierfläche des Rastschenkels zusammen, um das Steckteil gegenüber dem Halteteil auszurichten.

In einer bevorzugten Ausgestaltung des erfindungsgemässen Befestigungsclips hat der Hakenabschnitt in der ersten Transversalrichtung eine erste Breite und in einer zu der ersten Transversalrichtung orthogonalen zweiten Transversalrichtung eine zweite Breite, wobei die erste Breite grösser ist als die zweite Breite. Diese ungleichmässige Ausgestaltung des Hakenabschnitts kommt vor allem dann zum Tragen, wenn das Halteteil in vorteilhafter Weise zwei gegenüberliegend angeordnete Rastschenkel aufweist, deren Zentrierflächen in einem Mindestabstand voneinander beabstandet sind, wobei der Mindestabstand grösser oder gleich der zweiten Breite des Hakenabschnitts ist. Denn in diesem Fall lässt sich das mit dem Halteteil verbundene Steckteil bei Drehung um einen Sicherungswinkel von 90° in eine Position bringen, die es ermöglicht, den Hakenabschnitt zwischen den Zentrierflächen der Rastschenkel aus dem Halteteil herauszuziehen.

Einzelheiten und weitere Vorteile des erfindungsgemässen Befestigungsclips ergeben sich aus der nachfolgenden Beschreibung eines bevorzugten Ausführungsbeispiels. In denen das Ausführungsbeispiel lediglich schematisch darstellenden Zeichnungen veranschaulichen im einzelnen:
- Fig. 1: einen Längsschnitt durch den erfindungsgemässen Befestigungsclip, der das Steckteil und das Halteteil lose miteinander verbunden zeigt;
- Fig. 2: einen Längsschnitt gemäss Fig. 1, der das Steckteil und das Halteteil im formschlüssigen Eingriff zeigt;
- Fig. 3: einen Schnitt gemäss der Linie III-III in Fig. 1;
- Fig. 4: einen Schnitt gemäss der Linie IV-IV in Fig. 1;
- Fig. 5: einen Schnitt gemäss der Linie V-V in Fig. 1 und
- Fig. 6: einen Schnitt gemäss der Linie VI-VI in Fig. 1.

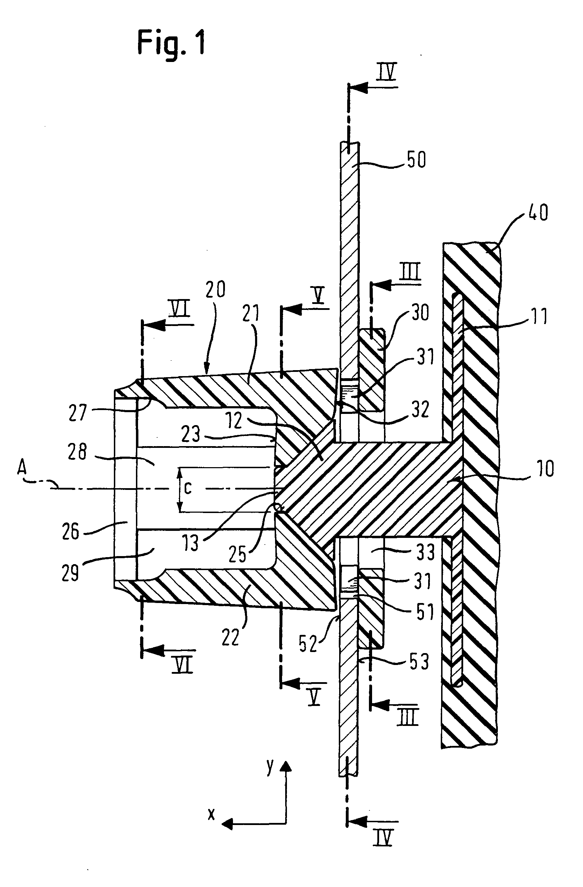

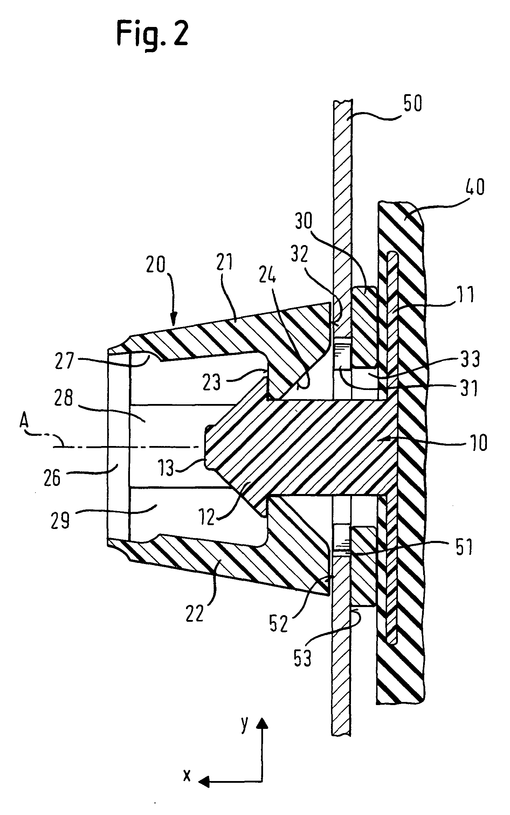

Der in den Fig. 1 und 2 dargestellte Befestigungsclip setzt sich aus einem Steckteil 10 und einem Halteteil 20 zusammen, die jeweils durch beispielsweise Spritzgiessen aus Kunststoff gefertigt sind. Das Steckteil 10 weist einen Fussabschnitt 11 auf, der stoffschlüssig in ein gummielastisches Dichtungsprofil 40 eingebettet ist. Das Steckteil 10 ist ferner mit einem sich in einer Befestigungsrichtung x an den Fussabschnitt 11 anschliessenden Hakenabschnitt 12 versehen. Der Hakenabschnitt 12 weist in einer zu der Befestigungsrichtung x orthogonalen ersten Transversalrichtung y eine erste Breite b₁ und in einer sowohl zu der Befestigungsrichtung x als auch zu der ersten Transversalrichtung y orthogonalen zweiten Transversalrichtung z eine zweite Breite b₂. Die erste Breite b₁ ist dabei grösser als die die zweite Breite b₂. An den Hakenabschnitt 12 schliesst sich in Befestigungsrichtung x ein Zentrierabschnitt 13 an, der ein freies Ende des Steckteils 10 bildet. Die Breite des Zentrierabschnitts 13 in der zweiten Transversalrichtung z entspricht der Breite b₂ des Hakenabschnitts 12.

Das Halteteil 20 weist zwei gegenüberliegend angeordnete Rastschenkel 21, 22 auf. Die Rastschenkel 21, 22 sind in der ersten Transversalrichtung y elastisch verformbar. Zu diesem Zweck weist das Halteteil 20 einen kreisförmigen Gürtelabschnitt 26 auf, an dem die Rastschenkel 21, 22 schwenkbar angeordnet sind. Die Rastschenkel 21, 22 sind im Bereich des Gürtelabschnitts 26 mit einer Vertiefung 27 versehen, die ein filmartiges Scharnier bildet, um ein gezieltes Schwenken der Rastschenkel 21, 22 in der ersten Transversalrichtung y zu gewährleisten. Die Verformungsfähigkeit der Rastschenkel 21, 22 lässt sich somit durch die Ausgestaltung der Vertiefung 27 beeinflussen.

Wie die Fig. 1 und 2 ferner erkennen lassen, weisen die Rastschenkel an einem der Vertiefung 27 abgewandten freien Ende eine Anlagefläche 32 auf, die an einem sich in der ersten Transversalrichtung y erstreckenden ebenen Abschnitt der Karosserie 50 eines Kraftfahrzeugs angrenzt. Die Anlagefläche 32 verläuft in einem Ausgangszustand der Rastschenkel 21, 22 geringfügig geneigt zur ersten Transversalrichtung y. Der Neigungswinkel der Anlagefläche 32 ist derart, dass sich die Anlagefläche 32 im verschwenkten Zustand der Rastschenkel 21, 22 annähernd parallel zu der Karosserie 50 erstreckt. Die Anlagefläche 32 geht in eine sich in Befestigungsrichtung x konisch verjüngende Spreizfläche 24 über. An die Spreizfläche 24 schliesst sich in Befestigungsrichtung x eine Zentrierfläche 25 an, die annähernd parallel zur Befestigungsrichtung x verläuft. Die auf diese Weise gegenüberliegend angeordneten Zentrierflächen 25 der Rastschenkel 21, 22 haben im Ausgangszustand der Rastschenkel 21, 22 einen Mindestabstand c voneinander, wie aus Fig. 1 ersichtlich ist. Der Mindestabstand c ist grösser oder zumindest gleich der Breite b₂ des Hakenabschnitts 12 des Steckteils 10. Die Zentrierfläche 25 mündet an einer Absatzfläche 23, die sich im wesentlichen in der ersten Transversalrichtung y und damit annähernd parallel zu der Anlagefläche 32 erstreckt.

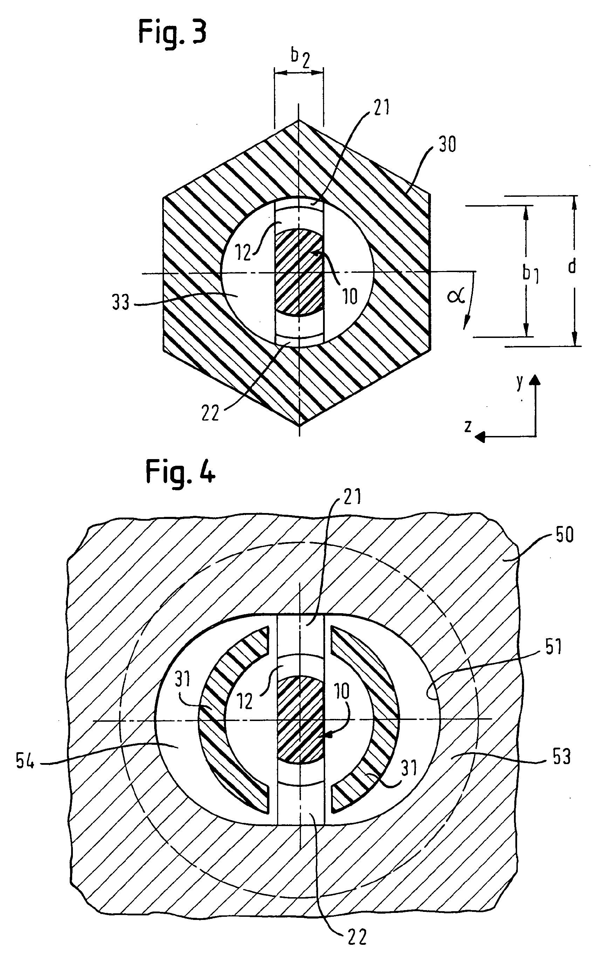

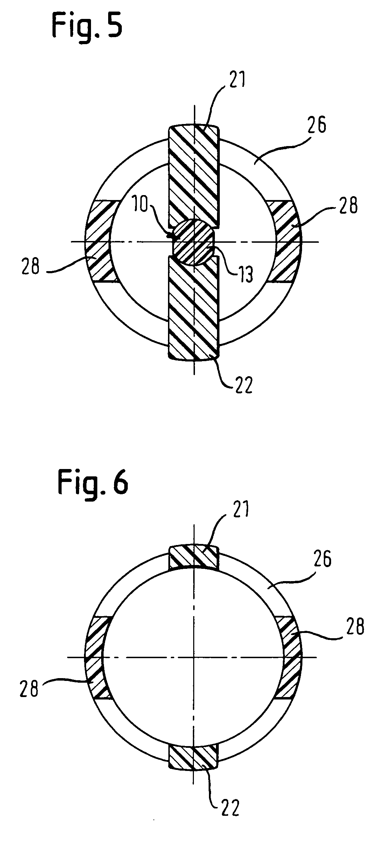

Um ein ungehindertes Verschwenken der Rastschenkel 21, 22 sicherzustellen, weist das Halteteil 20 zwei gegenüberliegend angeordnete Wandungen 28 auf, die durch Ausnehmungen 29 von den Rastschenkel 21, 22 beabstandet sind, wie aus den Fig. 5 und 6 ersichtlich ist. Die Wandungen 28 sind an einem ersten Ende mit dem Gürtelabschnitt 26 verbunden und weisen an einem zweiten Ende Abstandsglieder 31 auf, an denen eine Halteplatte 30 angeordnet ist. Die Abstandsglieder 31 sind gekrümmt ausgebildet und erstrecken sich durch eine als Langloch 51 ausgebildete Öffnung der Karosserie 50, wie insbesondere in Fig. 4 zu erkennen ist. Demgegenüber zeigt Fig. 3, dass die Halteplatte 30 als Sechskant ausgebildet und mit einem mittig angeordneten Durchgang 33 versehen ist. Der im Querschnitt kreisförmige Durchgang 33 hat einen Durchmesser d, der grösser ist als die Breite b₁ des Hakenabschnitts 12. Auf diese Weise lässt sich das Steckteil 10 durch den Durchgang 33 hindurch in das Halteteil 20 einführen.

Der zuvor beschriebene Befestigungsclip dient dazu, das Dichtungsprofil 40 an der Karosserie 50 zu befestigen. Zu diesem Zweck wird zunächst das Halteteil 20 in das Langloch 51 eingesetzt. Im eingesetzten Zustand grenzt die Anlagefläche 32 der Rastschenkel 21, 22 an einen das Langloch 51 umgebenden inneren Rand 52 der Karosserie 50 an. Die Halteplatte 30 dagegen liegt an einem das Langloch 51 umgebenden äusseren Rand 53 auf der den Rastschenkeln 21, 22 abgewandten Seite der Karosserie 50 an, wie aus den Fig. 1 und 2 ersichtlich ist. Das Halteteil 20 wird auf diese Weise zwischen der Halteplatte 30 und den Rastschenkeln 21, 22 formschlüssig an der Karosserie 50 gehalten. Wie Fig. 4 zu erkennen gibt, sind die sich durch das Langloch 51 erstreckenden Abstandsglieder 31 so dimensioniert, dass ein gewisser Freiraum 54 zu den das Langloch 51 begrenzenden Rändern 52, 53 verbleibt. Der Freiraum 54 ermöglicht, die Abstandsglieder 31 innerhalb des Langlochs 51 zu bewegen und damit das Halteteil 20 um eine zu der Befestigungsrichtung x parallelen Rotationsachse A zu drehen. Das Drehen des Halteteils 20 vereinfacht das Einsetzen und Entfernen des Halteteils 20 in beziehungsweise aus dem Langloch 51 und ermöglicht zudem, einen zwischen dem Steckteil 10 und dem Halteteil 20 bewirkten Formschluss zu lösen.

Dies ist darauf zurückzuführen, dass zum Befestigen des Dichtungsprofils 40 an der Karosserie 50 das Steckteil 10 derart in das Halteteil 20 eingeführt wird, dass der Hakenabschnitt 12 beim Auftreffen auf die Spreizfläche 24 die Schenkel 21, 22 in der ersten Transversalrichtung y verschwenkt und im in das Halteteil 20 eingeführten Zustand formschlüssig an der Absatzfläche 23 anliegt, wie aus Fig. 2 ersichtlich ist. Der mit der Zentrierfläche 25 der Schenkel 21, 22 zusammenwirkende Zentrierabschnitt 13 des Steckteils 10 stellt dabei sicher, dass die Schenkel 21, 22 gleichmässig verschwenkt werden. Wird das Halteteil 20 um einen Sicherungswinkel α von circa 90° gedreht, so kommen die Schenkel 21, 22 in der zweiten Transversalrichtung z zu liegen. Da der Mindestabstand c zwischen den Zentrierflächen 25 der Schenkel 21, 22 grösser oder zumindest gleich der Breite b₂ des Hakenabschnitts 12 in der zweiten Transversalrichtung z ist, wird der Formschluss zwischen dem Hakenabschnitt 12 und der Absatzfläche 23 gelöst mit der Folge, dass sich das Steckteil 10 aus dem Halteteil 20 und dem Langloch 51 herausziehen lässt.

Der sich aus dem Steckteil 10 und dem Halteteil 20 zusammensetzende Befestigungsclip zeichnet sich somit durch eine zerstörungsfreie Demontage aus. Ein einfaches Drehen des Halteteils 20 wird durch die als Sechskant ausgebildete Halteplatte 30 gewährleistet, die ein Greifen des Halteteils 20 mit einem Werkzeug, beispielsweise einem Schraubenschlüssel, ermöglicht. Der zweigeteilte Befestigungsclip bietet zudem den Vorteil einer einfachen Montage, da das Steckteil 10 auf Grund der elastischen Verformungsfähigkeit der Rastschenkel 21, 22 durch ein praxisgerechtes Stecken formschlüssig mit dem Halteteil 20 verbunden werden kann. Nicht zuletzt gewährleisten die Schenkel 21, 22 im verschwenkten Zustand einen zuverlässigen Formschluss zwischen dem mit dem Dichtungsprofil 40 stoffschlüssig verbundenen Steckteil 10 und dem an der Karosserie 50 befestigten Halteteil 20, der den Forderungen nach einer verhältnismässig grossen Abzugskraft Rechnung trägt.

### Bezugszeichenliste

- 10: Steckteil
- 11: Fussabschnitt
- 12: Hakenabschnitt
- 13: Zentrierabschnitt

- 20: Halteteil
- 21: Rastschenkel
- 22: Rastschenkel
- 23: Absatzfläche
- 24: Spreizfläche
- 25: Zentrierfläche
- 26: Gürtelabschnitt
- 27: Vertiefung
- 28: Wandung
- 29: Ausnehmung
- 30: Halteplatte
- 31: Abstandsglied
- 32: Anlagefläche
- 33: Durchgang

- 40: Dichtungsprofil

- 50: Karosserie
- 51: Langloch
- 52: innerer Rand
- 53: äusserer Rand
- 54: Freiraum

- α: Sicherungswinkel
- A: Rotationsachse
- b₁: erste Breite
- b₂: zweite Breite
- c: Mindestabstand
- d: Durchmesser
- x: Befestigungsrichtung
- y: erste Transversalrichtung
- z: zweite Transversalrichtung

## Patentansprüche

1. Befestigungsclip, insbesondere zum Befestigen eines eine Fensterscheibe einfassenden Dichtungs- und/oder Führungsprofils (40) an der Karosserie (50) eines Kraftfahrzeugs, mit einem Halteteil (20), das an einem ersten Bauteil (50) befestigbar und um eine zu einer Befestigungsrichtung (x) parallelen Rotationsachse (A) drehbar ist, und einem Steckteil (10), das an einem zweiten Bauteil (40) befestigbar und in Befestigungsrichtung (x) mit dem Halteteil (20) verbindbar ist, wobei das Halteteil (20) mit wenigstens einem Rastschenkel (21, 22), der in einer zu der Befestigungsrichtung (x) orthogonalen ersten Transversalrichtung (y) elastisch verformbar ist und eine Absatzfläche (23), an der das Steckteil (10) zum Verbinden mit dem Halteteil (20) formschlüssig festlegbar ist, aufweist, und einem Gürtelabschnitt (26), an dem der Rastschenkel (21, 22) schwenkbar angeordnet ist, versehen ist, **dadurch gekennzeichnet, dass** der Rastschenkel (21, 22) mit einem freien Ende, das dem Gürtelabschnitt (26) abgewandt ist und eine an das erste Bauteil (50) angrenzende Anlagefläche (32) aufweist, und einer sich in Befestigungsrichtung (x) konisch verjüngenden Spreizfläche (24), durch die der Rastschenkel (21, 22) beim Einführen des Steckteils (10) in das Halteteil (20) in der ersten Transversalrichtung (y) verformt wird, versehen ist, wobei der Formschluss zwischen dem Steckteil (10) und der Absatzfläche (23) durch Drehen des Halteteils (20) um einen vorgegebenen Sicherungswinkel (α) lösbar ist.

2. Befestigungsclip nach Anspruch 1, **dadurch gekennzeichnet, dass** der Sicherungswinkel (α) annähernd 90° beträgt.

3. Befestigungsclip nach Anspruch 1 oder 2, **dadurch gekennzeichnet, dass** der Gürtelabschnitt (26) kreisförmig ist.

4. Befestigungsclip nach einem der Ansprüche 1 bis 3, **dadurch gekennzeichnet, dass** der Rastschenkel (21, 22) im Bereich des Gürtelabschnitts (26) mit einer Vertiefung (27) versehen ist.

5. Befestigungsclip nach einem der Ansprüche 1 bis 4, **dadurch gekennzeichnet, dass** das Halteteil (20) wenigstens eine Wandung (28) aufweist, die durch eine Ausnehmung (29) von dem Rastschenkel (21, 22) beabstandet ist.

6. Befestigungsclip nach Anspruch 5, **dadurch gekennzeichnet, dass** die Wandung (28) ein erstes Ende, das mit dem Gürtelabschnitt (26) verbunden ist, und ein zweites Ende, an dem eine vorzugsweise polygonal ausgestaltete Halteplatte (30) angeordnet ist, aufweist.

7. Befestigungsclip nach Anspruch 6, **dadurch gekennzeichnet, dass** die Halteplatte (30) durch ein vorzugsweise gekrümmt ausgebildetes Abstandsglied (31) mit der Wandung (28) verbunden ist, wobei sich das Abstandsglied (31) durch eine vorzugsweise annähernd ovale Öffnung (51) des ersten Bauteils (50) erstreckt.

8. Befestigungsclip nach Anspruch 7, **dadurch gekennzeichnet, dass** die Anlagefläche (32) an einen inneren Rand (52) der Öffnung (51) des ersten Bauteils (50) angrenzt, wobei die Halteplatte (30) auf der dem Rastschenkel (21, 22) abgewandten Seite des ersten Bauteils (50) an einem äusseren Rand (53) der Öffnung (51) anliegt.

9. Befestigungsclip nach einem der Ansprüche 6 bis 8, **dadurch gekennzeichnet, dass** die Halteplatte (30) mit einem Durchgang (33) versehen ist.

10. Befestigungsclip nach einem der Ansprüche 1 bis 9, **dadurch gekennzeichnet, dass** der Rastschenkel (21, 22) eine sich in Befestigungsrichtung (x) an die Spreizfläche (24) anschliessende Zentrierfläche (25) aufweist.

11. Befestigungsclip nach einem der Ansprüche 1 bis 10, **dadurch gekennzeichnet, dass** das Steckteil (10) einen an dem zweiten Bauteil (40) befestigbaren Fussabschnitt (11) und einen sich in Befestigungsrichtung (x) an den Fussabschnitt (11) anschliessenden Hakenabschnitt (12) aufweist.

12. Befestigungsclip nach Anspruch 11, **dadurch gekennzeichnet, dass** der Fussabschnitt (11) stoffschlüssig mit dem zweiten Bauteil (40) verbunden ist.

13. Befestigungsclip nach Anspruch 11 oder 12, **dadurch gekennzeichnet, dass** das Steckteil (10) einen sich in Befestigungsrichtung (x) an den Hakenabschnitt (12) anschliessenden Zentrierabschnitt (13) aufweist.

14. Befestigungsclip nach einem der Ansprüche 11 bis 13, **dadurch gekennzeichnet, dass** der Hakenabschnitt (12) in der ersten Transversalrichtung (y) eine erste Breite (b₁) und in einer zu der ersten Transversalrichtung (y) orthogonalen zweiten Transversalrichtung (z) eine zweite Breite (b₂) hat, wobei die erste Breite (b₁) grösser ist als die zweite Breite (b₂).

15. Befestigungsclip nach Anspruch 14, **dadurch gekennzeichnet, dass** das Halteteil (20) zwei gegenüberliegend angeordnete Rastschenkel (21, 22) aufweist, deren Zentrierflächen (25) in einem Mindestabstand (c) voneinander beabstandet sind, wobei der Mindestabstand (c) grösser oder gleich der zweiten Breite (b₂) des Hakenabschnitts (12) ist.
